(19) Europäisches Patentamt
European Patent Office
Office européen des brevets

(11) Publication number: **0 174 806 B1**

(12) **EUROPEAN PATENT SPECIFICATION**

(45) Date of publication of patent specification: **29.01.92**

(51) Int. Cl.$^5$: **C10M 107/50**, D06M 15/643

(21) Application number: **85306306.3**

(22) Date of filing: **05.09.85**

(54) **Lubricating agents for the production of carbon yarns.**

(30) Priority: **14.09.84 JP 193671/84**

(43) Date of publication of application:
**19.03.86 Bulletin 86/12**

(45) Publication of the grant of the patent:
**29.01.92 Bulletin 92/05**

(84) Designated Contracting States:
**FR GB**

(56) References cited:
**US-A- 3 717 575**
**US-A- 4 009 248**
**US-A- 4 078 104**
**US-A- 4 080 417**
**US-A- 4 311 626**

(73) Proprietor: **Takemoto Yushi Kabushiki Kaisha**
**2-5, Minato-machi**
**Gamagouri-shi Aichi-ken(JP)**

(72) Inventor: **Fujii, Tsukasa**
**30-2 Ichiba, Kamigo-machi**
**Toyota-shi Aichi-ken(JP)**
Inventor: **Isobe, Jun**
**1-113 aza Kitaura Futagawa-machi**
**Toyohashi-shi Aichi-ken(JP)**

(74) Representative: **Ablewhite, Alan James et al**
**MARKS & CLERK 57/60 Lincoln's Inn Fields**
**London WC2A 3LS(GB)**

EP 0 174 806 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to lubricating agents for the production of carbon yarns and more particularly to lubricating agents which, when applied to acrylic fiber to be used as a precursor (hereinafter to be referred to simply as the precursor), prior to the oxidizing process, can not only give to said precursor superior filament separability and processability but also prevent adhesion (fusing) after the oxidizing process, thus making it possible to produce carbon yarns with superior physical characteristics.

Carbon yarns are generally produced first by obtaining flame resistant yarns from a precursor by a process for making the product flame resistant (hereinafter referred simply as the oxidizing process) wherein the precursor is heated and burnt at 200 - 300 °C in an oxidizing atmosphere and then by a carbonization process wherein carbonization takes place in an inert atmosphere at a high temperature over 700 °C. In such a case, a lubricating agent is applied prior to the oxidizing process, and usually during the process in which the precursor is produced. In addition to the generally desired characteristics such as lubricity, antistatic capability and cohesion, however, it is important, in view of the aforementioned processes for the production of carbon yarns, that the lubricating agent to be used for this purpose provide superior filament separability and infusibility.

In the past, phosphates of alkali metals, various cationic surfactants, polyoxyalkylene ethers, etc. have been generally used as lubricating agents of this type. Although they are generally acceptable regarding antistatic capability, cohesion and lubricity, they are inferior regarding filament separability because their basic tendency to decompose. In addition, they have the disadvantage of generating tar during the oxidizing process, or of vaporizing mostly during the initial period of the heating and causing adhesion between the fibers.

In order to overcome this difficulty, many silicone type lubricating agents have been considered such as dimethyl polysiloxanes, phenylmethyl polysiloxanes, epoxy polysiloxanes, polyether polysiloxanes, amino polysiloxanes, etc. (Japanese Patents Tokko 51-12739, Tokko 52-24136, Tokkai 52-148227, etc). These silicone type lubricating agents, however, are not free of disadvantages. Dimethyl polysiloxanes and phenylmethyl polysiloxanes are thermally superior but are poor in precursor filament separability and in preventing adhesion in the oxidizing process. This may be because they do not contain polar groups in their molecules and hence their adsorption on the precursor surface is insufficient. Moreover, since they are non-polar, problems of fuzz and yarn breakage can occur easily, caused by static electricity. As for epoxy polysiloxanes, fiber-to-fiber fixing takes place due, for example, to the ring-opening polymerization of epoxy groups within their molecules and since they themselves generate tar, they are totally incapable of preventing fusion during the oxidizing process. Their presence, therefore, makes the problem worse instead of solving it. As for polyether polysiloxanes, the ether bonds within their molecules are thermally weak so that they become decomposed in most parts and diffuse away, failing to exercise their capability of preventing fusion. Moreover, the heat of their thermal decomposition becomes a cause of abnormal oxidizing reactions of the yarns. As for amino-modified polysiloxanes, although they have more favorable characteristics than the other conventional silicone type lubricating agents discussed above, they are not stable enough thermally nor are their filament separability and infusibility property sufficient. From the point of view of industrial applications, furthermore, they are by no means free from the problems of fuzz and yarn breakage caused by gummy deposits on various guiding means and rollers during the processing.

Combination of dimethyl polysiloxanes with amino-modified polysiloxanes are known for other purposes. Thus, US-A 4 078 104 discloses a combination of an organopolysiloxane and an amino-modified polysiloxane for use as a release agent for bituminous products, although no reference is made to lubricant properties, in particular with reference to treatment of acrylic precursors for carbon fibre. US-A 3 717 575 discloses compositions containing at least three components: a mineral oil, a silione oil, and an amino-modified polyorganosiloxane, for use as lubricant in the knitting of Spandex fibres.

It is therefore an object of this invention to eliminate the aforementioned disadvantages by providing lubricating agents which are superior in processability and filament separability in the subsequent processes including the production of precursors and the oxidizing process without causing problems such as fusion, and thus make it possible to produce high quality carbon yarns successfully.

The above and the other objects of the present invention have been achieved by the present inventors who discovered that lubricating agents comprising specified types of organo polysiloxanes and amino-modified polysiloxanes are to be preferred.

## Detailed Description of the Invention

This invention relates to a lubricating agent for a lubricating agent for an acrylic precursor yarn used in

the manufacture of carbon fibres consisting of two lubricant ingredients:-

(a) at least one organo polysiloxane of the general formula I

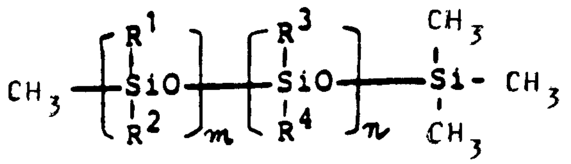

(I)

(where $R^1$, $R^2$ and $R^3$ all represent methyl groups; $R^4$ represents a methyl group or a phenyl group; and m and n are integers) said organo polysiloxane having the viscosity at 25° C in the range of 5 to 1000 $mm^2/s$

(b) at least one amino-modified polysiloxane of general formula II

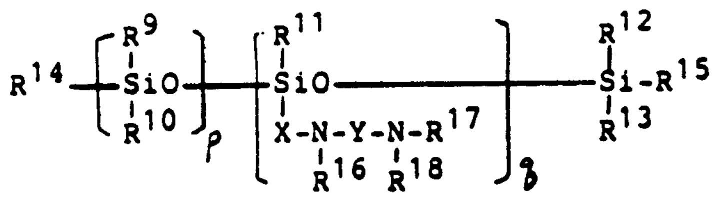

(II)

(where $R^9$ to $R^{15}$ all represent methyl groups; $R^{16}$, $R^{17}$ and $R^{18}$ each represent a hydrogen atom, a methyl group or an ethyl group; X represents an alkylene group with 3 to 5 carbon atoms; Y represents an alkylene group with 2 to 6 carbon atoms; and p and q are integers) said amino-modified polysiloxane have the viscosity at 25° C in the range of 10-10000 $mm^2/s$

and optionally, other non-lubricant co-ingredients.

According to the present invention, organo polysiloxanes given by (I) must have viscosity in the range of 5 - 1000 square millimeters per second. (In the following, viscosity will always be presented by its value in units of $mm^2/s$ at 25° C). If viscosity is less than 5, this means that the molecular weight is not sufficiently large and such organo polysiloxanes will evaporate in most parts during an early stage of the precursor production process or the oxidizing process and the intended effects will not be obtained. If viscosity exceeds 1000, on the other hand, the capability of preventing adhesion is adversely affected. Those with viscosity in the range of 10 to 100 are preferable. Dimethyl polysiloxanes satisfying these conditions are good examples.

Amino-modified polysiloxanes given by general formula (II) must have a viscosity in the range of 10 to 10000 $mm^2/s$.

Amino-modified polysiloxanes shown by (II) are effective for the purpose of this invention probably because two nitrogen atoms are contained per amino-modified group of their molecules and this improves the orientation characteristics with respect to the filaments.

There are no particular limitations according to the present invention regarding the ratio at which aforementioned organo polysiloxanes and amino-modified polysiloxanes should be mixed together. From the point of view of the effects, however, the weight ratio of organo polysiloxanes/amino-modified polysiloxanes should be between 10/90 and 90/10, or preferably between 25/75 and 90/10.

In addition to the aforementioned organo polysiloxanes and amino-modified polysiloxanes, the lubricating agents of the present invention may also contain appropriate amounts of any publicly known surface active agent, antioxidant or antiseptic for the production of carbon yarns as long as the desired effects of the present invention are not adversely affected. The lubricating agents of the present invention are applied during the acrylic precursor production process or before the oxidizing process. As for the mode of application, they may be applied either as an emulsion, as a solution with an organic solvent or neat. They may be applied by kiss- roll method, spray method or guide oiling method. The amount to be deposited in these cases is preferably 0.01 to 5 weight % with respect to the precursor in order to have the effects of the present invention fully realized and also to realize these effects appropriately in view of economy and corresponding to the amount used.

As explained above, the lubricating agents of the present invention are superior in processability in the precursor production process and the oxidizing process and in particular regarding the filament separability of the precursor and the capability of preventing adhesion during the oxidizing. They can show better

results than if organo polysiloxanes are used alone as in conventional practice.

In what follows, test examples are described to illustrate the present invention and its effects but it should be remembered that the present invention is by no means limited by these examples.

Test Examples

Water emulsions of lubricating agents comprising 85 weight % of the lubricating agents shown in Table 1 and Table 2 (Test Examples 1 - 15 and Comparison Examples 1 - 15) and 15 weight % of polyoxyethylene nonylphenylether were prepared. These water emulsions were applied to acrylic filament yearns (16000 denier/12000 filaments) at the rate of 0.5 ± 0.1 weight % (exclusive of water component) by immersion method. The yarns were then dried for 4 seconds at 115°C by means of a dry heat roller to prepare a precursor tow and this was used as sample to evaluate its filament separability by the method described below. The precursor tows were then processed for 60 minutes inside an oven of forced circulation type at 240°C to obtain oxidized fibers and they were used as samples to evaluate their capacities of resisting adhesion by the method to be described later.

Furthermore, the aforementioned water emulsions were applied to acrylic filament yarns (75 denier/40 filaments) at the rate of 0.5 ± 0.1 weight % respectively by the kiss-roll method to prepare samples and the coefficients of friction and generation of static electricity were evaluated by the method to be described later.

The results of these evaluations are also shown in Tables 1 and 2.

Filament Separability ("Sep" in the Tables)

The sample precursor yarn was cut to 2cm/lengths and shaken lightly over a black sheet of paper and its filament separability was evaluated according to the following standards:

000 : very good;
00 : good;
0 : fair;
1 : bad
X : very bad.

Infusibility ("Inf" in the Tables

The sample of oxidized yarn was cut to 2 cm lengths and shaken lightly over a white sheet of paper and its infusibility was evaluated according to the following standards:

000 : No fusion
00 : Very little fusion
0 : Little fusion
1 : Some fusion
X : Fusion to a considerable degree.

Measurement of the coefficient of friction ("Fric" in the Tables

The sample was left for 24 hours under the conditions of 20°C and 65% relative humidity and caused to run in contact with a cylindrical chromium-plated pin under the same conditions with initial tension 20g and yarn velocity of 100m/min. Coefficient of friction was measured by using a $\mu$-meter (made by Eiko Sokki-sha) was evaluated according to the following standards:

00 : Coefficient of friction less than 0.25
0 : Coefficient of friction equal to or greater than 0.25 and less than 0.28
1 : Coefficient of friction equal to or greater than 0.28 and less than 0.31
X : Coefficient of friction equal to or greater than 0.31

Evaluation of static electricity ("Volt" in the Tables)

Concurrently with the aforementioned measurement of coefficient of friction, electrostatic voltage of the yarn after the contact with the chromium-plated pin was measured by means of a static electrometer (made by Kasuga Denki Kabushiki Kaisha) and the results were evaluated according to the following standards:

0 : Voltage less than 100V

1 : Voltage 100V to less than 300V

X : Voltage 300V or greater.

In Tables 1 and 2, DMS means dimethyl polysiloxane, PS means phenyl methyl polysiloxane, PES means polyether-modified polysiloxane, ES means epoxy-modified polysiloxane; the numbers in parentheses are viscosity; AS represent amino-modified polysiloxane:

AS-A is

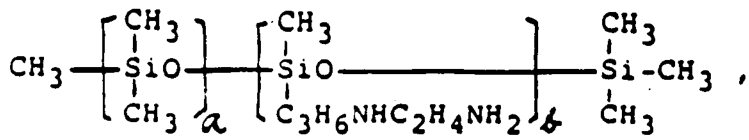

AS-B is

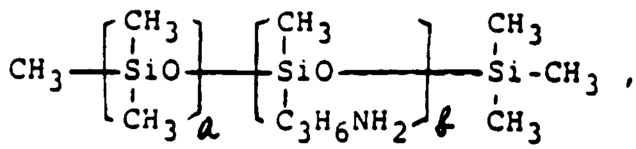

AS-C is

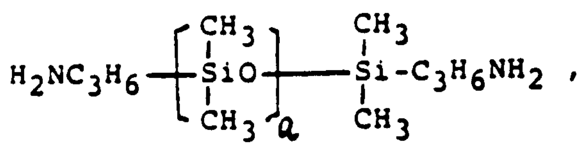

AS-D is

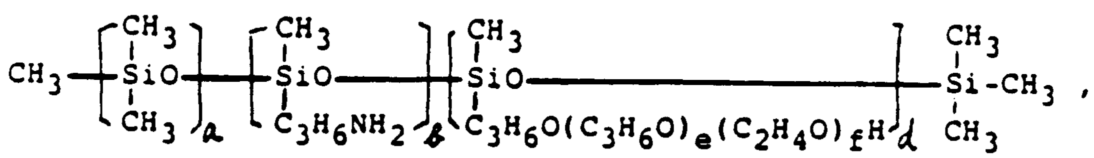

(where a, b, d, e and f are integers)

The results of Tables 1 and 2 clearly show the effects of the present invention

Table 1

| | | wt ratio | Sep | Inf | Fric | Volt |
|---|---|---|---|---|---|---|
| Comparison Examples: | | | | | | |
| 1 | DMS(500 | | 1-X | 1-X | 1 | X |
| 2 | AS-B | 100 | 1-X | 1-X | 1 | 1 |
| 3 | DMS(3000)/AS-B | 95/5 | X | X | X | 1 |
| 4 | DMS(2)/AS-B | 5/95 | 1-X | 1-X | 1 | 1 |
| 5 | DMS(5) | 100 | 1-X | 1-X | 0 | X |
| 6 | AS-C | 100 | 1 | 1 | 0 | 0 |
| 7 | DMS(3000)/AS-C | 95/5 | 1-X | 1-X | X | 1 |
| 8 | DMS(2)/AS-C | 5/95 | 1 | 1 | 1 | 1 |
| 9 | PS(400) | 100 | 1-X | 1-X | 1 | X |
| 10 | AS-D | 100 | 1 | X | X | 0 |
| 11 | PS(3000)/AS-D | 95/5 | X | X | X | 1 |
| 12 | PS(4)/AS-D | 5/95 | 1 | X | X | 0 |
| 13 | PES(3700) | 100 | X | X | X | 0 |
| 14 | PES(3700)/AS-B | 95/5 | X | X | X | 0 |
| 15 | ES(8000)/AS-C | 5/95 | X | X | X | 1 |
| 16 | DMS(500)/AS-B | 95/5 | 0 | 0 | 0 | 0 |
| 17 | DMS(5)/AS-C | 5/95 | 0 | 0 | 0 | 0 |
| 18 | PS(400)/AS-D | 95/5 | 0 | 0 | 0 | 0 |

Table 2

| Test Examples: | | wt ratio | Sep | Inf | Fric | Volt |
|---|---|---|---|---|---|---|
| 1 | DMS(10)/AS-A | 80/20 | 000 | 000 | 00 | 0 |
| 2 | DMS(20)/AS-A | 50/50 | 000 | 000 | 00 | 0 |
| 3 | DMS(100)/AS-A | 20/80 | 000 | 000 | 0 | 0 |
| 4 | PS(20)/AS-A | 80/20 | 000 | 000 | 0 | 0 |

## Claims

1. A lubricating agent for an acrylic precursor yarn used in the manufacture of carbon fibres consisting of two lubricant ingredients:-

   (a) at least one organo polysiloxane of the general formula 1

   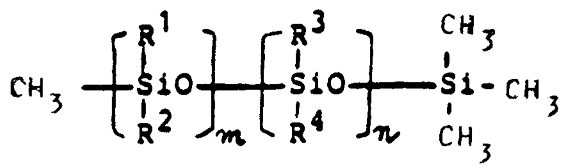

   (I)

   (where $R^1$, $R^2$ and $R^3$ all represent methyl groups; $R^4$ represents a methyl group or a phenyl group; and m and n are integers) said organo polysiloxane having the viscosity at 25° C in the range of 5 to 1000 $mm^2/s$.

   (b) at least one amino-modified polysiloxane of general formula II

   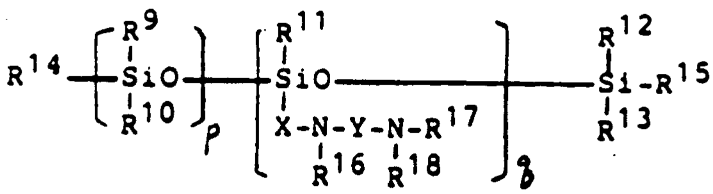

   (II)

   (where $R^9$ to $R^{15}$ all represent methyl groups; $R^{16}$, $R^{17}$ and $R^{18}$ each represent a hydrogen atom, a methyl group or an ethyl group; X represents an alkylene group with 3 to 5 carbon atoms; Y represents an alkylene group with 2 to 6 carbon atoms; and p and q are integers) said amino-modified polysiloxane have the viscosity at 25° C in the range of 10-10000 $mm^2/s$

   and optionally, other non-lubricant co-ingredients.

2. A lubricating agent according to claim 1, wherein the viscosity of 25° C of the organo polysiloxane of formula (I) is in the range of 10 to 100 $mm^2/s$.

3. A lubricating agent of according to claim 1 wherein the weight ratio of said organo polysiloxane to said amino-modified polysiloxane is in the range of 10/90 to 90/10.

4. A lubricating agent according to claim 3 wherein the weight ratio of said organo polysiloxane to said amino-modified polysiloxane is in the range of 25/75 to 90/10.

**5.** A method of lubricating an acrylic precursor yarn used in the manufacture of carbon fibres comprising applying to the yarn a lubricating agent according to any of claims 1 to 4.

**6.** A method according to claim 5, in which the lubricating agent is applied at a level of 0.01 to 5% by weight based on said acrylic precursor yarn.

**Revendications**

**1.** Un agent lubrifiant pour fil précurseur acrylique utilisé dans la fabrication de fibres de carbone constitué de deux ingrédients lubrifiants:

(a) au moins un organopolysiloxane de formule générale I:

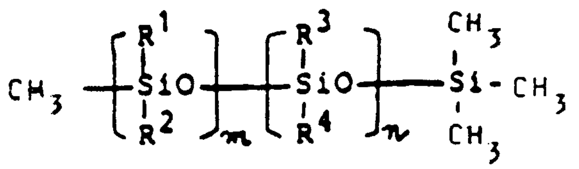

(I)

(où $R^1$, $R^2$ et $R^3$ représentent tous des groupements méthyle; $R^4$ représente un groupement méthyle ou un groupement phényle et m et n sont des nombres entiers) ledit organopolysiloxane ayant à 25 °C une viscosité se situant dans la plage de 5 à 1.000 $mm^2/s$.

(b) au moins un polysiloxane modifié par un groupement aminé de formule générale II:

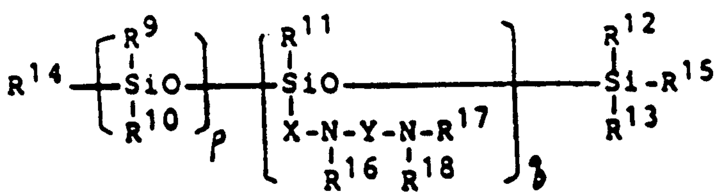

(II)

(où $R^9$ à $R^{15}$ représentent tous des groupements méthyle; $R^{16}$, $R^{17}$ et $R^{18}$ représentent chacun un atome d'hydrogène, un groupement méthyle ou un groupement éthyle, X représente un groupement alkylène contenant de 3 à 5 atomes de carbone; Y représente un groupement alkylène de 2 à 6 atomes de carbone et p et q sont des nombres entiers), ledit polysiloxane modifié par un groupement amino ayant à 25 °C une viscosité se situant dans la plage de 10 à 10.000 $mm^2/s$ et, facultativement, d'autres co-ingrédients non-lubrifiants.

**2.** Un agent lubrifiant suivant la revendication 1, dans lequel la viscosité à 25 °C de l'organo polysiloxane de formule (I) se situe dans la plage de 10 à 100 $mm^2/s$.

**3.** Un agent lubrifiant suivant la revendication 1, dans lequel le rapport pondéral dudit organo polysiloxane sur ledit polysiloxane modifié par un groupement aminé se situe dans la plage de 10/90 à 90/10.

**4.** Un agent lubrifiant suivant la revendication 3, dans lequel le rapport pondéral dudit organo polysiloxane sur ledit polysiloxane modifié par un groupement aminé se situe dans la plage de 25/75 à 90/10.

**5.** Une méthode pour la lubrification d'un fil précurseur acrylique utilisé dans la fabrication de fibres de carbone comprenant l'application sur le fil d'un agent lubrifiant suivant l'une quelconque des revendications 1 à 4.

**6.** Une méthode suivant la revendication 5, dans laquelle l'agent lubrifiant est appliqué à un taux de 0.01 à 5 % en poids sur la base dudit fil précurseur acrylique.

**Patentansprüche**

**1.** Schmiermittel für ein zur Herstellung von Kohlenstoffasern verwendetes Acryl-Vorgarn welches zwei

schmierende Bestandteile enthält, und zwar :

(a) mindestens ein Organopolysiloxan mit der allgemeinen Formel I:

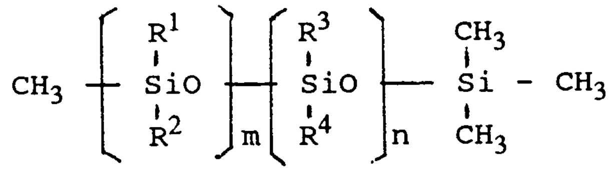 (I)

(bei der $R^1$, $R^2$ und $R^3$ Methylgruppen darstellen; $R^4$ eine Methylgruppe oder eine Phenylgruppe darstellt; und m und n ganze Zahlen sind), wobei das besagte Organopolysiloxan bei 25° C eine Viskosität im Bereich von 5 bis 1000 $mm^2/s$ aufweist;

(b) mindestens ein aminomodifiziertes Polysiloxan mit der allgemeinen Formel II:

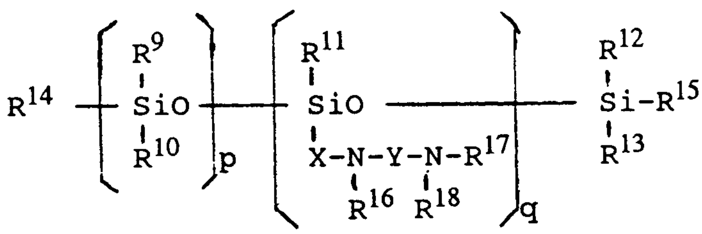 (II)

(bei der $R^9$ bis $R^{15}$ Methylgruppen darstellen; $R^{16}$, $R^{17}$ und $R^{18}$ ein Wasserstoffatom, eine Methylgruppe oder eine Äthylgruppe darstellen; X eine Alkylengruppe mit 3 bis 5 Kohlenstoffatomen darstellt; Y eine Alkylengruppe mit 2 bis 6 Kohlenstoffatomen darstellt; und p und q ganze Zahlen sind), wobei das besagte aminomodifizierte Polysiloxan bei 25° C eine Viskosität im Bereich von 10-10000 $mm^2/s$ aufweist;

und wahlweise außerdem weitere, nichtschmierende Bestandteile enthält.

**2.** Schmiermittel gemäß Anspruch 1, wobei die Viskosität des Organopolysiloxans der Formel (I) bei 25° C im Bereich von 10 bis 100 $mm^2/s$ liegt.

**3.** Schmiermittel gemäß Anspruch 1, wobei das Gewichtsverhältnis des besagten Organopolysiloxans zu dem besagten aminomodifizierten Polysiloxan in dem Bereich von 10/90 bis 90/10 liegt.

**4.** Schmiermittel gemäß Anspruch 3, wobei das Gewichtsverhältnis des besagten Organopolysiloxans zu dem besagten aminomodifizierten Polysiloxan in dem Bereich von 25/75 bis 90/10 liegt.

**5.** Verfahren zum Schmieren eines zur Herstellung von Kohlenstoffasern verwendeten Acryl-Vorgarns, wobei ein gemäß irgendeinem der Ansprüche 1 bis 4 hergestelltes Schmiermittel auf das Garn aufgebracht wird.

**6.** Verfahren gemäß Anspruch 5, wobei das Schmiermittel in einer Menge von 0,01 bis 5 Gewichtsprozent, bezogen auf das besagte Acryl-Vorgarn aufgebracht wird.